# FASCICULE DE BREVET EUROPEEN

(11) **EP 1 849 225 B1**
(45) Date de publication et mention de la délivrance du brevet: **18.11.2020**
(21) Numéro de dépôt: 06724851.8
(22) Date de dépôt: 17.02.2006
(51) Int. Cl.: H02J 4/00, B64D 41/00

(54) **ALIMENTATION ÉLECTRIQUE D'ÉQUIPEMENTS D'UN MOTEUR D'AVION À TURBINE À GAZ**
STROMVERSORGUNG FÜR EINE GASTURBINENTRIEBWERKANLAGE FÜR LUFTFAHRZEUGE
ELECTRIC SUPPLY FOR AN AIRCRAFT GAS TURBINE ENGINE EQUIPMENT

(30) Priorité: 17.02.2005 FR 0501642
(43) Date de publication de la demande: 31.10.2007
(73) Titulaire: Safran Aircraft Engines, 75015 Paris (FR)
(72) Inventeur: DUBOIS, Gilles, 91210 Draveil (FR); MEURET, Régis, 78400 Chatou (FR); VERNOCHET, Maurice, 77000 La Rochette (FR)
(74) Mandataire: Cabinet Beau de Loménie
(86) Numéro de dépôt international: PCT/EP2006/060075
(87) Numéro de publication internationale: WO 2006/087379

(56) Documents cités:
- FR-A1- 2 638 208
- US-A- 5 233 286
- US-A- 5 764 502
- US-A- 5 929 537
- US-A1- 2004 119 454
- MALDONADO M A ED - YOGI GOSWAMI D ET AL INSTITUTE OF ELECTRICAL AND ELECTRONICS ENGINEERS: "POWER MANAGEMENT AND DISTRIBUTION SYSTEM FOR A MORE-ELECTRIC AIRCRAFT (MADMEL)-PROGRAM STATUS" PROCEEDINGS OF THE 30TH. INTERSOCIETY ENERGY CONVERSION ENGINEERING CONFERENCE. ORLANDO, FL, JULY 30 - AUG. 4,1995, PROCEEDINGS OF THE INTERSOCIETY ENERGY CONVERSION ENGINEERING CONFERENCE (IECEC), NEW YORK, IEEE, US, vol. VOL. 1 CONF. 30, 30 juillet 1995 (1995-07-30), pages 13-18, XP000730657 ISBN: 0-7803-2771-3
- NIGGEMAN R E ET AL: "270-VDC/hybrid 115-VAC electric power generating system technology demonstrator" AEROSPACE AND ELECTRONICS CONFERENCE, 1991. NAECON 1991., PROCEEDINGS OF THE IEEE 1991 NATIONAL DAYTON, OH, USA 20-24 MAY 1991, NEW YORK, NY, USA,IEEE, US, 20 mai 1991 (1991-05-20), pages 448-454, XP010048147 ISBN: 0-7803-0085-8
- "AUTOMATED POWER-DISTRIBUTION SYSTEM", NTIS TECH NOTES, US DEPARTMENT OF COMMERCE. SPRINGFIELD, VA, US, 1 July 1992 (1992-07-01), page 483/484, XP000308042, ISSN: 0889-8464

## Description

### Arrière-plan de l'invention

L'invention concerne l'alimentation électrique d'équipements de moteurs d'avions à turbine à gaz.

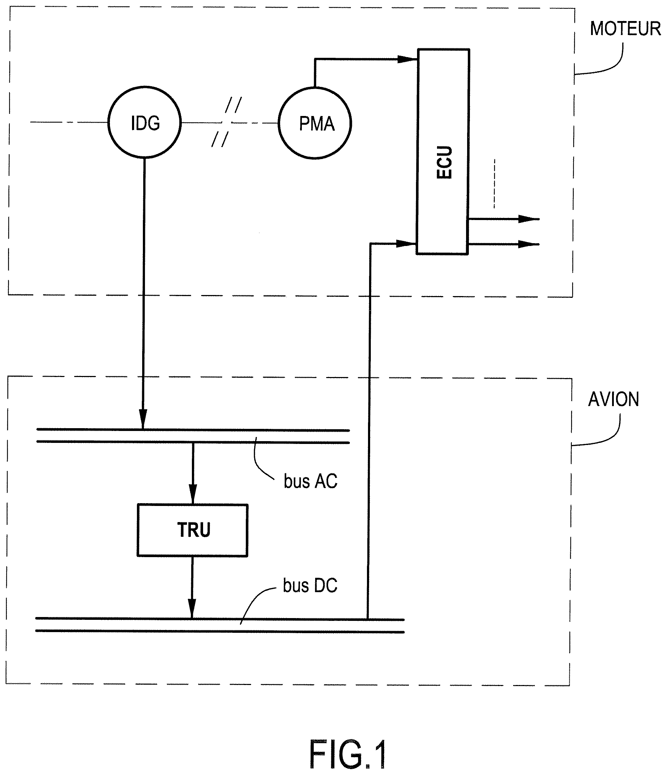

Un schéma traditionnel de production d'énergie électrique à partir d'un moteur d'avion à turbine à gaz est montré sur la figure 1.

Un générateur tel qu'un générateur à entraînement intégré (ou IDG, pour Integrated Drive Generator), entraîné par le moteur, fournit de l'énergie électrique à un bus de courant alternatif (bus AC) faisant partie du circuit de distribution électrique de l'avion. Ce circuit comprend habituellement en outre un bus de courant continu (bus DC) alimenté à partir du bus AC par l'intermédiaire d'un transformateur redresseur TRU (pour Transformer Rectifier Unit). Des systèmes particuliers de production et distribution d'énergie électriques pour des réseaux électriques d'avions sont décrits dans les documents US 5 764 502, US 5 233 286, US 2004/119454 et EP0 838 396, notamment.

Lorsqu'un certain régime moteur est atteint, un module de régulation électronique à pleine autorité (ou ECU, pour Electronic Control Unit) associé au moteur est alimenté par un générateur tel qu'un alternateur à aimants permanents (ou PMA, pour Permanent Magnet Alternator) qui est monté sur un boîtier d'équipements couplé mécaniquement à un arbre de la turbine du moteur. L'ECU est aussi relié au bus DC, comme illustré, ou, en variante, au bus AC du circuit électrique de l'avion pour être alimenté tant qu'un régime moteur suffisant n'a pas été atteint pour assurer la fourniture de l'énergie électrique requise par le PMA ou en cas de défaut de celui-ci.

Un schéma analogue à celui de la figure 1 existe au niveau de chaque moteur de l'avion permettant de disposer de plusieurs sources d'énergie électrique.

L'ECU utilise l'énergie électrique reçue pour permettre le fonctionnement de ses composants et exciter différents organes du moteur tels que des sondes ou capteurs, des électro-robinets ou des servo-valves requérant une puissance électrique limitée. L'ECU comprend habituellement deux parties identiques (1/2 ECU), ou voies, redondantes.

Le document "Automated Power Distribution System" (NASA Tech Briefs; ISSN 0145-319X, 01-07-1992) décrit un système de distribution d'énergie automatisé qui surveille et contrôle l'alimentation électrique des modules connectés au réseau. Le système gère des courants alternatifs monophasés de 208 V, 20 kHz et des courants continus de 120 à 150 V. La puissance est distribuée aux charges des modules depuis des unités de commande de distribution d'énergie, ou « power-distribution control units » en Anglais, (PDCU) via des distributeurs de sous-système. Des bus en anneau acheminent l'alimentation des PDCU depuis la source de puissance.

### Objet et résumé de l'invention

L'invention concerne plus précisément les circuits électriques de moteurs à turbine à gaz, non les circuits électriques d'avions, et a pour but de fournir une nouvelle architecture de la distribution d'énergie électrique dans un moteur d'avion à turbine à gaz, convenant particulièrement lorsqu'il est désiré qu'un nombre croissant d'équipements du moteur utilisent de l'énergie électrique pour leur fonctionnement à la place de l'énergie hydraulique.

Ce but est atteint grâce à un moteur d'avion à turbine à gaz selon la revendication 1.

La puissance électrique nécessaire peut être prélevée sur le réseau de distribution électrique de l'avion. La présence d'un générateur spécifique pour alimenter le moteur n'est alors plus requise. La consommation électrique des avions étant croissante, une puissance électrique de plus en plus élevée doit être fournie au réseau électrique avion. La puissance électrique requise pour le moteur étant alors relativement faible par rapport à celle du réseau de bord de l'avion, elle peut être prélevée sur ce réseau sans inconvénient majeur.

Il reste toutefois possible d'utiliser une source particulière, telle qu'un générateur dédié au moteur et entraîné par celui-ci, pour fournir la puissance électrique nécessaire en toute autonomie du moteur.

Lorsque la source d'énergie électrique est une source de tension alternative, telle que celle d'un réseau électrique de bord de l'avion (par exemple 115 ou 230 Vac/400 Hz ou à fréquence variable), ou un générateur dédié au moteur, différents modes de réalisation du dispositif d'alimentation électrique du moteur peuvent être envisagés :
- un premier mode de réalisation dans lequel le premier bus est un bus de distribution de tension alternative relié au troisième bus par un transformateur et, avantageusement, un disjoncteur, tandis que le deuxième bus est un bus de distribution de tension alternative qui peut être relié au troisième bus simplement par un disjoncteur, la tension sur le deuxième bus étant la même que celle disponible sur le troisième bus;
- un deuxième mode de réalisation dans lequel le premier bus est un bus de distribution de tension continue relié au troisième bus par un convertisseur de tension ou transformateur-redresseur et, avantageusement, un disjoncteur, tandis que le deuxième bus est un bus de distribution de tension alternative qui peut être relié au troisième bus simplement par un disjoncteur, comme dans le premier mode de réalisation ;
- un troisième mode de réalisation dans lequel le premier bus est un bus de distribution de tension continue comme dans le deuxième mode de réalisation, tandis que le deuxième bus est un bus de distribution de tension continue relié au troisième bus par un convertisseur de tension ou transformateur-redresseur et, avantageusement, un disjoncteur ; et
- un quatrième mode de réalisation dans lequel le premier bus est un bus de distribution de tension alternative comme dans le premier mode de réalisation et le deuxième bus est un bus de distribution de tension continue comme dans le troisième mode de réalisation.

On notera que, dans les premier et deuxième modes de réalisation, le deuxième bus peut être relié au troisième bus par un transformateur lorsque la tension alternative désirée sur le deuxième bus est différente de celle disponible sur le troisième bus.

Lorsque la source d'énergie électrique est une source de tension continue, telle que celle d'un réseau électrique de bord de l'avion (par exemple 270 Vdc), un cinquième mode de réalisation du dispositif d'alimentation électrique du moteur peut être envisagé dans lequel le premier bus est un bus de distribution de tension continue relié au troisième bus par un convertisseur de tension et, avantageusement, un disjoncteur, tandis que le deuxième bus de distribution d'énergie électrique peut être relié au troisième bus simplement par un disjoncteur, la tension sur le deuxième bus étant la même que celle disponible sur le troisième bus. Un convertisseur de tension pourra toutefois être prévu entre le deuxième bus et le troisième bus lorsque la tension désirée sur le deuxième bus est différente de celle disponible sur le troisième bus.

Le premier bus d'alimentation est utilisé de préférence pour alimenter des premiers équipements électriques requérant une puissance inférieure par exemple à 100 W. Les premiers équipements électriques peuvent comprendre un ou plusieurs équipements choisis parmi un module de régulation électronique du moteur, des vannes de réglage du débit global de carburant fourni au moteur, un système de gestion de la santé et de l'utilisation d'organes du moteur, des vannes de décharge transitoire de compresseur, des vannes de réglage de débit de carburant fourni à des injecteurs de chambre de combustion du moteur, des vannes de réglage de débit d'air pour l'ajustement de jeu au sommet d'aubes de turbine et un dispositif d'allumage de la combustion.

Les autres équipements électriques peuvent comprendre un ou plusieurs équipements choisis parmi des dispositifs de commande d'angle de calage pour des aubes à calage variable, des vannes de décharge ajustables de compresseur, et une pompe d'un circuit d'alimentation du moteur en carburant.

Selon une particularité du dispositif d'alimentation électrique conforme à l'invention, des équipements électriques du moteur sont associés à des circuits électroniques d'excitation, de commande ou d'asservissement et au moins une partie des circuits électroniques sont implantés localement au niveau des équipements correspondants ou intégrés dans ceux-ci et sont alimentés par les bus d'alimentation électrique.

Selon une variante du dispositif d'alimentation électrique conforme à l'invention, des systèmes d'ajustement de jeu au sommet d'aubes de turbine comprennent des dispositifs de chauffage électrique alimentés directement par le troisième bus.

### Brève description des dessins

L'invention sera mieux comprise à la lecture de la description faite ci-après, à titre indicatif mais non limitatif, en référence aux dessins annexés sur lesquels :
- la figure 1, déjà décrite, illustre très schématiquement un mode connu de génération et de distribution d'énergie électrique pour un circuit électrique d'avion et un circuit électrique de moteur d'avion;
- les figures 2 à 6 illustrent très schématiquement différents modes de réalisation d'un circuit d'alimentation électrique de moteur d'avion conforme à l'invention ;
- la figure 7 illustre plus en détail une partie du circuit d'alimentation électrique des figures 2 à 6 ; et
- les figures 8 et 9 illustrent très schématiquement deux variantes de réalisation du circuit d'alimentation électrique de la figure 2.

### Description détaillée d'un mode de réalisation de l'invention

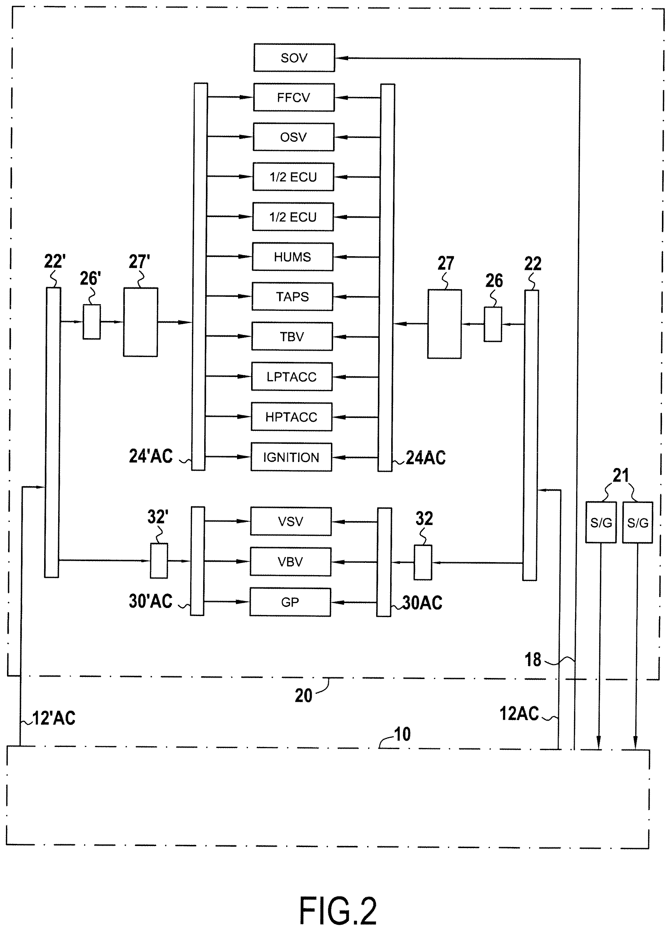

Sur les figures 2 à 6, les références 10 et 20 désignent les périmètres respectifs d'un avion et d'un moteur à turbine à gaz équipant cet avion.

Un ou, comme illustré, deux générateurs électriques 21 sont entraînés par le moteur 20 pour fournir l'énergie électrique requise pour le réseau de distribution électrique de l'avion. On utilise avantageusement des machines électriques capables de fonctionner comme démarreur électrique puis comme générateur entraîné par la turbine du moteur, machines couramment désignées sous l'abréviation S/G ("Starter/Generator"). A titre de redondance, un ou deux générateurs semblables entraînés par un autre moteur de l'avion fournissent également de la puissance électrique au réseau de distribution électrique de l'avion, en parallèle avec les générateurs 21 afin d'avoir une redondance de sources d'alimentation électrique pour l'avion. L'énergie électrique fournie est convertie dans le réseau de distribution électrique de l'avion en tension alternative, typiquement 115 ou 230 Vac/400 Hz ou fréquence variable, ou en tension continue, typiquement 270 Vdc.

L'énergie électrique nécessaire au fonctionnement des équipements électriques du moteur est prélevée sur le réseau de distribution électrique de l'avion par des lignes d'alimentation 12, 12'.

Dans le mode de réalisation de la figure 2, les lignes d'alimentation 12, 12' délivrent une tension alternative.

La ligne d'alimentation 12 est reliée directement à un bus 22 du circuit d'alimentation électrique de l'avion. Un premier bus 24AC de distribution de tension alternative est relié au bus 22 par l'intermédiaire d'un disjoncteur 26 et d'un transformateur 27. Le transformateur 27 transforme la tension alternative fournie par le réseau de distribution électrique de l'avion via le bus 22 en une tension alternative d'amplitude inférieure, par exemple une tension de 115 Vac environ. Un deuxième bus 30AC de distribution de tension alternative est relié au bus 22 par l'intermédiaire d'un disjoncteur 32.

Le bus 24AC est utilisé pour fournir de l'énergie électrique nécessaire au fonctionnement ou à l'actionnement d'équipements du moteur demandant une puissance relativement peu élevée, typiquement inférieure à 100 W. Ces équipements peuvent comprendre l'un ou plusieurs des équipements suivants :
- un module de régulation électronique du moteur à pleine autorité redondante, ou ECU, représenté sur la figure par deux circuits identiques (dont un redondant) désignés par "1/2 ECU",
- une vanne de contrôle de débit carburant FFCV ("Fuel Flow Control Valve") d'un circuit de régulation du débit général en carburant fourni au moteur, telle que, par exemple, une vanne à commande directe commandée électriquement,
- une vanne de protection de survitesse OSV ("Over Speed Valve") du circuit de régulation du débit général en carburant fourni au moteur, telle que, par exemple, une vanne à commande directe commandée électriquement,
- un système de gestion de la santé et de l'utilisation d'organes du moteur HUMS ("Health and Usage Management System") fournissant des informations utiles pour le diagnostic de pannes et la maintenance d'organes du moteur,
- des vannes d'un système de réglage de débit carburant fourni à des injecteurs de la chambre de combustion du moteur, tel qu'un système TAPS ("Twin-Annular Pre-Swirl Combustor"),
- des vannes de décharge transitoire de compresseur TBV ("Transient Bleed Valves"), c'est-à-dire des vannes commandées lors de phases particulières de vol, notamment au décollage,
- des vannes de réglage de débit d'air pour des systèmes de réglage de jeu au sommet d'aubes de rotor pour turbine basse-pression et turbine haute-pression LPTACC ("Low Pressure Turbine Active Clearance Control") et HPTACC ("High Pressure Turbine Active Clearance Control"), et,
- un dispositif "IGNITION" d'allumage par bougie du moteur.

Le bus 30AC est utilisé pour fournir de l'énergie électrique nécessaire à l'actionnement d'équipements du moteur demandant une puissance relativement élevée. Ces équipements peuvent comprendre l'un ou plusieurs des équipements suivants :
- des dispositifs de commande d'angle de calage d'aubes stator à calage variable VSV ("Variable Stator Vanes"), à savoir des aubes d'étages redresseurs de compressseur,
- des vannes de décharge ajustables de compresseur VBV ("Variable Bleed Valves"), c'est-à-dire les vannes susceptibles d'être commandées pendant toute la durée de vol, et
- une pompe électrique d'un circuit d'alimentation général du moteur en carburant, notamment une pompe volumétrique à engrenages GP ("Gear Pump").

A titre de redondance, la ligne d'alimentation 12' est reliée directement à un bus 22' qui distribue, de façon symétrique au bus 22, une tension électrique alternative sur un bus 24'AC par l'intermédiaire d'un disjoncteur 26' et d'un transformateur 27' et qui distribue une tension électrique alternative sur un bus 30'AC par l'intermédiaire d'un disjoncteur 32'. Les équipements alimentés par les bus 24'AC et 30'AC sont les mêmes que ceux alimentés par les bus 24AC et 30AC.

Bien entendu, les listes d'équipements données ci-dessus ne sont pas exhaustives.

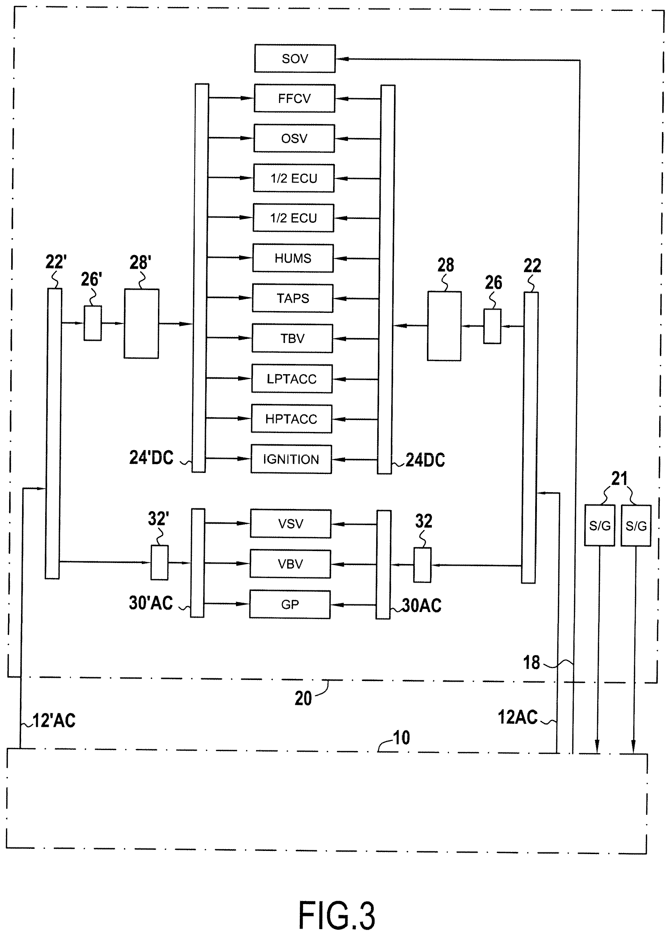

La figure 3 illustre un deuxième mode de réalisation du circuit d'alimentation électrique du moteur qui se distingue du mode de réalisation de la figure 2 en ce que le premier bus est un bus 24DC de distribution de tension continue relié au bus 22 par l'intermédiaire du disjoncteur 26 et d'un circuit convertisseur de tension 28. Le convertisseur 28 transforme la tension alternative fournie par le bus 22 en une tension continue d'amplitude inférieure, par exemple une tension de 28 VDC environ. On utilise avantageusement un convertisseur sécurisé 28 assurant une protection vis-à-vis des microcoupures pour maintenir l'alimentation du bus 24DC en cas de microcoupures de la tension alternative reçues. De façon similaire, le bus 22' est relié à un bus de tension continue 24'DC par l'intermédiaire du disjoncteur 26' et d'un convertisseur de tension 28', le bus 24'DC alimentant les mêmes équipements que le bus 24DC.

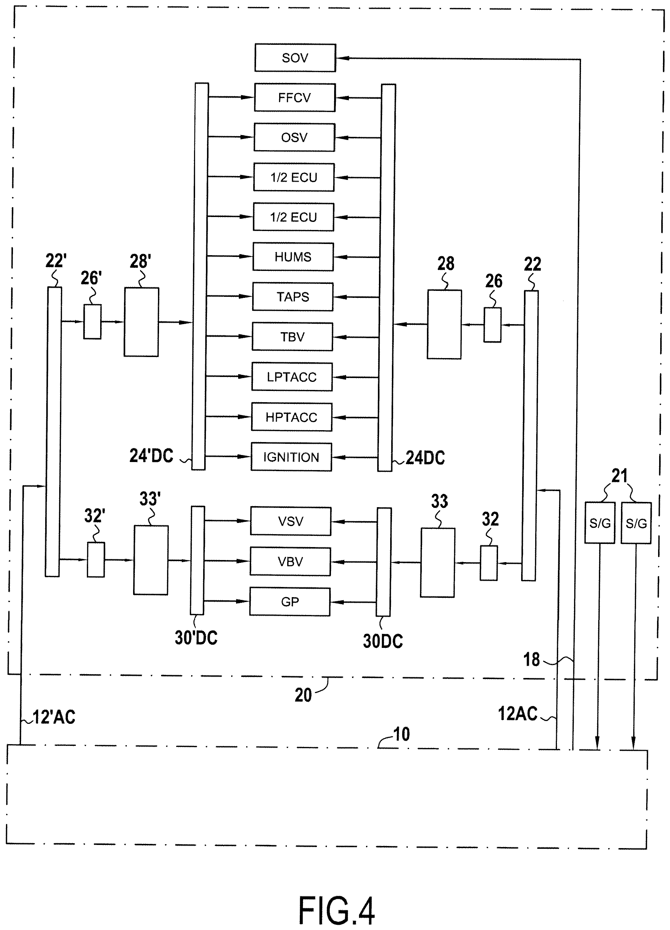

La figure 4 illustre un troisième mode de réalisation du circuit d'alimentation électrique du moteur qui se distingue du mode de réalisation de la figure 3 en ce que le deuxième bus est un bus 30DC de distribution de tension continue relié au bus 22 par l'intermédiaire du disjoncteur 32 et d'un transformateur-redresseur ou convertisseur 33, de préférence sécurisé vis-à-vis des microcoupures. Le transformateur-redresseur ou convertisseur 33 transforme la tension alternative du bus 22 en une tension continue (par exemple une tension de 270 Vdc lorsque le bus 22 distribue une tension de 115 Vac). De façon similaire, le bus 22' est relié à un bus 30'DC de tension continue par l'intermédiaire du disjoncteur 32' et d'un transformateur-redresseur ou convertisseur 33', le bus 30'DC alimentant les mêmes équipements que le bus 30DC.

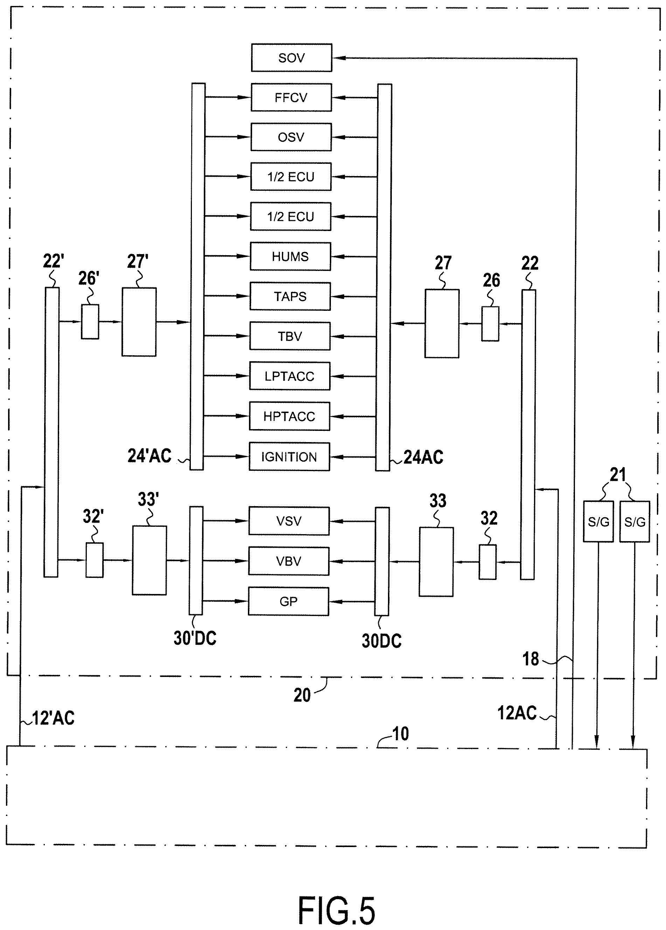

La figure 5 illustre un troisième mode de réalisation du circuit d'alimentation électrique du moteur qui se distingue du mode de réalisation de la figure 2 en ce que le deuxième bus est un bus 30DC de distribution de tension continue tel que celui de la figure 4, alimenté à partir du bus 22 à travers le disjoncteur 32 et le transformateur-redresseur ou convertisseur 33, de préférence sécurisé vis-à-vis des microcoupures. De même, un bus 30'DC est alimenté à partir du bus 22' à travers le disjoncteur 32' et le transformateur-redresseur ou convertisseur 33'.

On notera que, dans les modes de réalisation des figures 2 et 3, les bus 30AC et 30'AC pourront être reliés aux bus 22, 22' par l'intermédiaire de transformateurs si les tensions désirées sur les bus 30AC et 30'AC sont différentes de celle disponible sur les bus 22 et 22'.

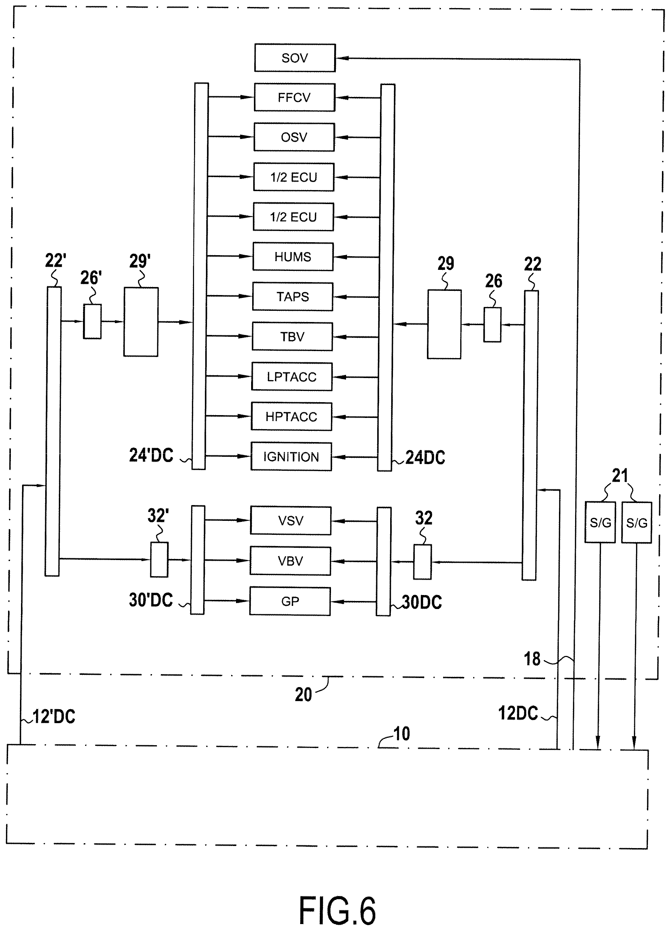

Dans le mode de réalisation de la figure 6, qui ne fait pas partie de l'invention, les lignes d'alimentation 12, 12' délivrent une tension continue directement à des bus 22, 22' d'alimentation continue du circuit d'alimentation électrique de l'avion. Un premier bus 24DC de distribution de tension continue est relié au bus 22 par l'intermédiaire d'un disjoncteur 26 et d'un convertisseur de tension 29 transformant la tension continue du bus 22 (par exemple une tension de 270 Vdc d'un réseau de bord continu d'un avion) en une tension continue réduite (par exemple une tension de 28 Vdc). Un deuxième bus 30DC de distribution de tension continue est relié au bus 22 par l'intermédiaire d'un disjoncteur 32. De façon similaire, un bus 24'DC de distribution de tension continue est relié au bus 22' par l'intermédiaire d'un disjoncteur 26' et d'un convertisseur de tension 29' tandis qu'un bus 30'DC de distribution de tension continue est relié au bus 22' par l'intermédiaire d'un disjoncteur 32'. Les équipements alimentés par les bus 24'DC et 30'DC sont les mêmes que ceux alimentés par les bus 24DC et 30DC.

On notera que, dans le mode de réalisation de la figure 6, les bus 30DC et 30'DC pourront être reliés aux bus 22 et 22' par l'intermédiaire de convertisseurs si les tensions désirées sur les bus 30DC et 30'DC sont différentes de celle disponible sur les bus 22 et 22'.

Le choix du mode de réalisation parmi ceux décrits ci-avant est effectué en fonction de la tension disponible à partir du réseau de bord de l'avion et de l'alimentation désirée pour commander le fonctionnement des équipements du moteur.

Le fonctionnement de certains équipements nécessite simplement une alimentation électrique. C'est le cas dans les exemples illustrés des équipements 1/2 ECU et HUMS alimentés en parallèle par les bus 24AC, 24DC ou 24'AC, 24'DC.

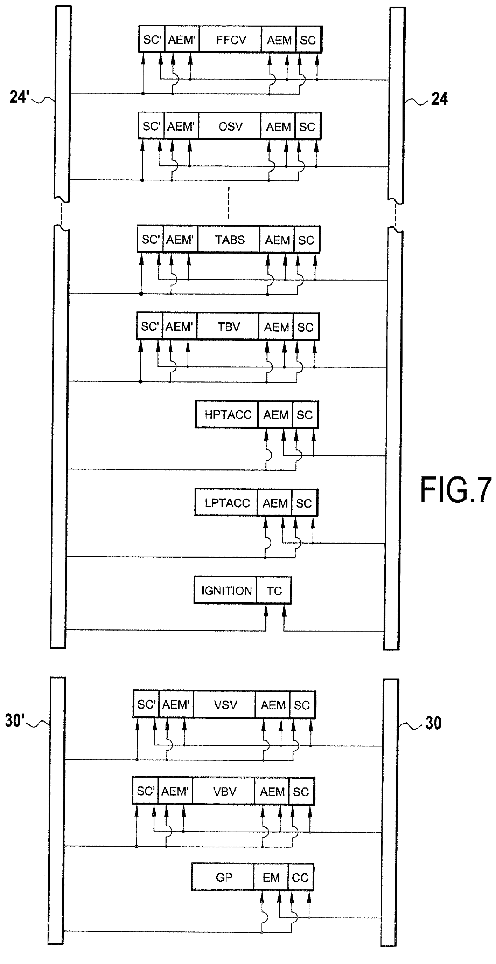

Le fonctionnement d'un ou plusieurs autres équipements nécessite simplement l'alimentation électrique d'un circuit d'excitation. Dans l'exemple illustré par la figure 7, c'est le cas de la bougie d'allumage du circuit "IGNITION" qui est reliée à un circuit d'excitation électronique TC alimenté en parallèle par les bus 24, 24' (c'est-à-dire 24AC ou 24DC et 24'AC ou 24'DC). Le circuit TC peut éventuellement être doublé à titre de redondance.

Le fonctionnement de la pompe électrique GP nécessite un moteur électrique EM et un circuit CC de commande électronique du moteur EM (figure 7). Le moteur électrique EM alimenté en parallèle par les bus 30 et 30' (c'est-à-dire 30AC ou 30DC et 30'AC ou 30'DC). Les enroulements du moteur EM celui-ci pourront éventuellement être doublés à titre de redondance, ainsi que le circuit de commande électronique CC associé.

Le fonctionnement d'un ou plusieurs des équipements restants est commandé par un actionneur électromécanique comprenant des moyens d'entraînement tels que vérin, moteur ou bobine électrique. C'est le cas en particulier des équipements FFCV, OSV, TAPS, TBV, HPTACC, LPTACC, VSV et VBV. Lorsque la sécurité de fonctionnement l'exige, l'actionneur électromécanique est doublé à titre de redondance. Ce peut être le cas en particulier des équipements FFCV, OSV, TBV, VSV et VBV qui sont montrés sur la figure 7 avec leurs actionneurs électromécaniques redondants AEM et AEM'. Chaque actionneur est alimenté en parallèle par les bus 24, 24' ou les bus 30, 30'. Dans d'autres cas, un seul actionneur électromécanique AEM peut être prévu, par exemple pour les équipements HPTACC et LPTACC, cet actionneur étant ici alimenté en parallèle par les bus 24, 24'.

Les équipements à position ajustable peuvent être associés en outre à des circuits d'asservissement permettent de maintenir leur position réelle détectée par capteur conforme à une position de consigne. Ce peut être le cas par exemple des équipements FFCV, VSV, VBV, HPTACC et LPTACC dont les actionneurs électromécaniques AEM et éventuellement AEM' sont pilotés par des circuits d'asservissement électroniques respectifs SC et SC'. Il peut en être ainsi également pour l'équipement OSV, comme dans l'exemple illustré, si une possibilité de régulation de débit carburant dans une plage restreinte est prévue après détection d'une sur-vitesse ou sur-poussée.

Dans l'exemple illustré, les circuits électroniques TC, CC, SC et SC' sont implantés localement au voisinage des équipements associés ou sont intégrés à ceux-ci. Les circuits TC, CC, SC, SC' sont alimentés en parallèle par les bus 24, 24' ou 30, 30' et sont reliés aux équipements 1/2 ECU par des liaisons (non représentées) pour recevoir des informations de commande ou des informations de consigne fournies par celui des deux équipements 1/2 ECU qui est actif. On notera qu'un circuit électronique d'un équipement alimenté en puissance par un bus alternatif pourra recevoir son alimentation d'un bus continu. L'implantation des circuits électroniques au niveau des équipements permet d'alléger les 1/2 ECU.

En variante, toutefois, les fonctions d'un ou plusieurs des circuits électroniques TC, CC, SC, SC' pourront être implantées dans les équipements 1/2 ECU en ménageant des liaisons appropriées entre ceux-ci et les équipements, moteurs ou actionneurs concernés.

On remarque aussi sur les figures 2 à 6 une ligne 18 reliant directement le réseau de distribution électrique de l'avion à une vanne de coupure d'alimentation carburant SOV ("Shut Off Valve") permettant de commander un arrêt moteur directement depuis le poste de pilotage de l'avion ou depuis le système de régulation automatique du moteur.

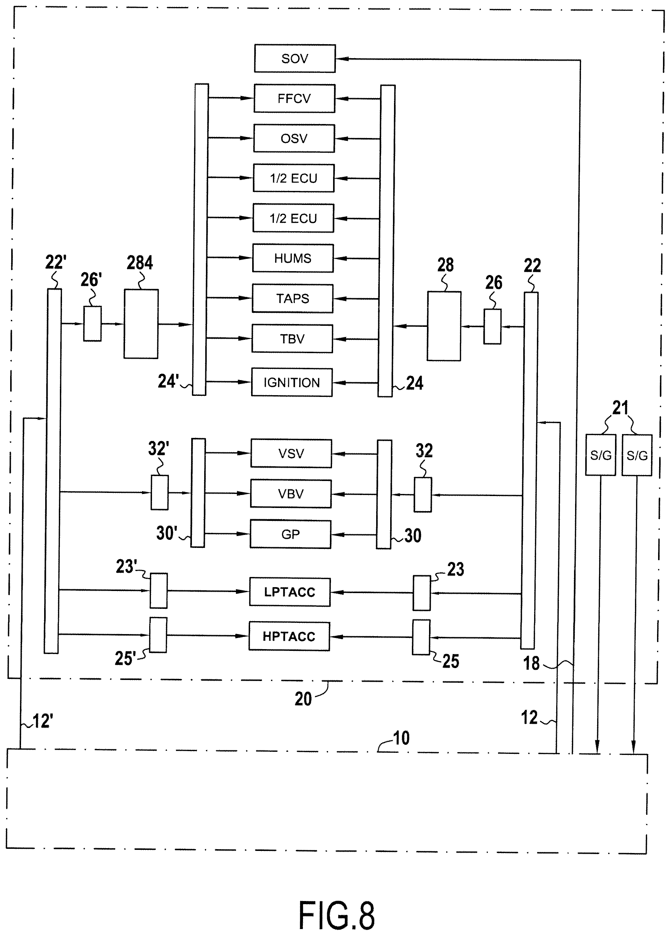

Dans ce qui précède, il a été considéré que les fonctions LPTACC et HPTACC sont assurées par commande de débit d'air venant impacter sur des secteurs d'anneaux de turbine pour commander des variations dimensionnelles par action sur la température des secteurs d'anneau. Ces mêmes fonctions peuvent en variante être assurées, de façon connue en soi, par des systèmes de chauffage résistif de bosses de carter de support d'anneau. Comme montré par la figure 8, ces systèmes LPTACC et HPTACC peuvent être alimentés directement en parallèle par les bus 22, 22', avec interposition de disjoncteurs 23, 23' et 25, 25'. Des circuits interrupteurs (non représentés) sont associés aux systèmes LPTACC et HPTACC et sont commandés par les 1/2 ECU pour commander l'alimentation par les bus 22, 22' ou l'interruption de cette alimentation.

Bien que la figure 8 montre une variante du mode de réalisation du circuit d'alimentation de la figure 2, cette même variante pourra être appliquée de la même façon aux modes de réalisation des figures 3 à 6.

Par rapport à l'état de la technique antérieure usuel, un avantage de l'invention est de disposer d'alimentations électriques communes à différents équipements électriques du moteur.

Un autre avantage particulier du circuit d'alimentation électrique illustré est que l'énergie électrique nécessaire aux équipements électriques du moteur est prélevée sur le réseau de distribution électrique de l'avion. Cela ne présente pas d'inconvénient notable dès lors que la puissance disponible sur le réseau de distribution électrique de l'avion est importante pour faire face aux besoins croissants en énergie électrique pour les équipements de l'avion, la puissance nécessaire pour le moteur ne représentant alors qu'une faible partie de cette puissance.

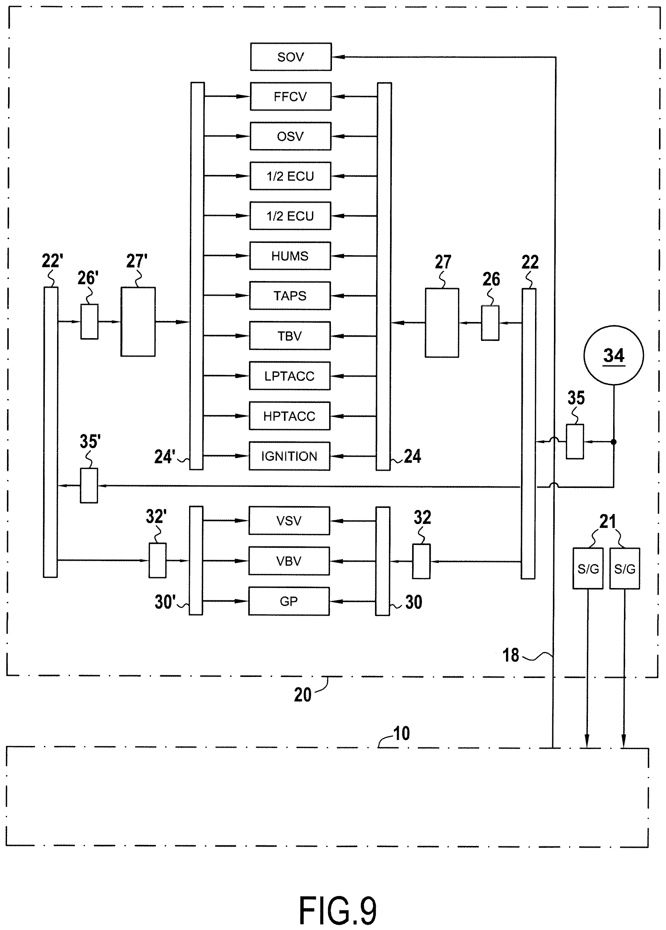

En variante, comme montré par la figure 9, il est toutefois possible d'alimenter directement le bus 22 (et le bus 22') à partir d'au moins un générateur redondant 34 propre au moteur et entraîné par celui-ci, des disjoncteurs 35, 35' étant insérés sur les lignes reliant le générateur 34 aux bus 22 et 22', les lignes 12 et 12' étant omises.

Le générateur 34 fournissant une tension alternative ou continue suivant le cas, son utilisation pourra être envisagée non seulement avec le mode de réalisation de la figure 2 (comme montré sur la figure 9), mais aussi avec le mode de réalisation des figures 3 à 6.

## Revendications

1. Moteur d'avion à turbine à gaz (20), comprenant un générateur électrique (21) entrainé par le moteur d'avion à turbine à gaz pour fournir de l'énergie électrique à un réseau de distribution électrique de l'avion (10), et un circuit d'alimentation électrique des équipements du moteur d'avion, le circuit d'alimentation électrique des équipements du moteur d'avion comprenant un premier bus (24) de distribution d'une tension continue (24DC) ou alternative (24AC) à des premiers équipements électriques du moteur et un deuxième bus (30) de distribution d'une tension continue (30DC) ou alternative (30AC) plus élevée aux autres équipements électriques du moteur,
le circuit d'alimentation électrique des équipements du moteur d'avion étant **caractérisé en ce qu'**il comprend en outre un troisième bus à tension alternative (22) relié d'une part au premier (24) et deuxième (30) bus par l'intermédiaire d'au moins un convertisseur de tension ou transformateur et d'autre part à une ligne d'alimentation (12) délivrant une tension alternative et destinée à être reliée au réseau de distribution électrique de l'avion.

2. Moteur d'avion à turbine à gaz selon la revendication 1, dans lequel un générateur électrique (21) supplémentaire entrainé par le moteur d'avion à turbine à gaz fournit de l'énergie électrique supplémentaire au réseau de distribution électrique de l'avion afin d'avoir une redondance de sources d'alimentation électrique pour l'avion.

3. Moteur d'avion à turbine à gaz selon la revendication 1, dans lequel le troisième bus à tension alternative (22) est relié à un générateur électrique (34) dédié au moteur (20) et entraîné par celui-ci.

4. Moteur d'avion à turbine à gaz selon l'une quelconque des revendications 1 à 3, dans lequel les premiers équipements électriques du moteur sont des équipements requérant une puissance électrique inférieure à 100 W.

5. Moteur d'avion à turbine à gaz selon l'une quelconque des revendications 1 à 4, dans lequel les premiers équipements électriques du moteur comportent au moins un équipement choisi parmi un module de régulation électronique du moteur (1/2 ECU), des vannes de réglage du débit global de carburant fourni au moteur (FFCV) et de protection de survitesse (OSV), un système de gestion de la santé et de l'utilisation d'organes du moteur (HUMS), des vannes de décharge transitoire de compresseur (TBV), des vannes de réglage de débit de carburant fourni à des injecteurs de chambre de combustion du moteur (TAPS), des vannes de réglage de débit d'air pour l'ajustement de jeu au sommet d'aubes de turbine (LPTACC, HPTACC) et un dispositif d'allumage de la combustion (IGNITION).

6. Moteur d'avion à turbine à gaz selon l'une quelconque des revendications 1 à 5, dans lequel les autres équipements électriques du moteur comportent au moins un équipement choisi parmi : des dispositifs de commande d'angle de calage pour des aubes à calage variable (VSV), des vannes de décharge ajustables de compresseur (VBV), et une pompe d'un circuit d'alimentation du moteur en carburant (GP).

7. Moteur d'avion à turbine à gaz selon l'une quelconque des revendications 1 à 6, dans lequel des équipements électriques du moteur sont associés à des circuits électroniques d'excitation, de commande ou d'asservissement, et au moins une partie desdits circuits électroniques est implantée localement au niveau des équipements correspondants et est alimentée par le premier ou deuxième bus d'alimentation électrique.

8. Moteur d'avion à turbine à gaz selon la revendication 7, **caractérisé en ce qu'**au moins une partie desdits circuits électroniques est intégrée aux équipements correspondants.

9. Moteur d'avion à turbine à gaz selon l'une quelconque des revendications 1 à 8, dans lequel des systèmes d'ajustement de jeu au sommet d'aubes de turbine (LPTACC, HPTACC) comprennent des dispositifs de chauffage électrique alimentés directement par le troisième bus à tension alternative (22).

## Patentansprüche

1. Gasturbinen-Flugzeugtriebwerk (20), umfassend einen elektrischen Generator (21), der über das Gasturbinen-Flugzeugtriebwerk angetrieben wird, um einem Stromverteilungsnetz des Flugzeugs (10) elektrische Energie zu liefern, sowie einen Kreis zur Stromversorgung der Einrichtungen des Flugzeugtriebwerks, wobei der Kreis zur Stromversorgung der Einrichtungen des Flugzeugtriebwerks einen ersten Bus (24) zum Verteilen einer Gleichspannung (24DC) oder Wechselspannung (24AC) an erste elektrische Einrichtungen des Triebwerks und einen zweiten Bus (30) zum Verteilen einer höheren Gleichspannung (30DC) oder Wechselspannung (30AC) an die anderen elektrischen Einrichtungen des Triebwerks umfasst,
wobei der Stromversorgungskreis der Einrichtungen des Flugzeugtriebwerks **dadurch gekennzeichnet ist, dass** er ferner einen dritten Wechselspannungsbus (22) umfasst, der einerseits mit dem ersten (24) und zweiten (30) Bus über wenigstens einen Spannungswandler oder Transformator und andererseits mit einer Versorgungsleitung (12) verbunden ist, die eine Wechselspannung liefert und dazu bestimmt ist, mit dem Stromverteilungsnetz des Flugzeugs verbunden zu werden.

2. Gasturbinen-Flugzeugtriebwerk nach Anspruch 1, bei dem ein zusätzlicher elektrischer Generator (21), der über das Gasturbinen-Flugzeugtriebwerk angetrieben wird, dem Stromverteilungsnetz des Flugzeugs zusätzliche elektrische Energie liefert, um eine Redundanz von Stromversorgungsquellen für das Flugzeug zu haben.

3. Gasturbinen-Flugzeugtriebwerk nach Anspruch 1, bei dem der dritte Wechselspannungsbus (22) mit einem elektrischen Generator (34) verbunden ist, der für das Triebwerk (20) bestimmt ist und über dieses angetrieben wird.

4. Gasturbinen-Flugzeugtriebwerk nach einem der Ansprüche 1 bis 3, bei dem die ersten elektrischen Einrichtungen des Triebwerks Einrichtungen sind, die eine elektrische Leistung von weniger als 100 W benötigen.

5. Gasturbinen-Flugzeugtriebwerk nach einem der Ansprüche 1 bis 4, bei dem die ersten elektrischen Einrichtungen des Triebwerks wenigstens eine Einrichtung umfassen, ausgewählt aus einem elektronischen Triebwerksregelungsmodul (1/2 ECU), Ventilen zur Regelung des Gesamtdurchsatzes des dem Triebwerk gelieferten Treibstoffs (FFCV) und zum Schutz vor Überdrehzahl (OSV), einem Health and Usage Monitoring System für Organe des Triebwerks (HUMS), Ventilen zur vorübergehenden Entlastung des Kompressors (TBV), Ventilen zur Regelung des Durchsatzes des Brennkammerinjektoren des Triebwerks gelieferten Treibstoffs (TAPS), Ventilen zur Regelung des Luftdurchsatzes für die Einstellung des Spiels an der Spitze von Turbinenschaufeln (LPTACC, HPTACC) und einer Vorrichtung zum Zünden der Verbrennung (IGNITION).

6. Gasturbinen-Flugzeugtriebwerk nach einem der Ansprüche 1 bis 5, bei dem die andere elektrischen Einrichtungen des Triebwerks wenigstens eine Einrichtung umfassen, die ausgewählt ist aus: Vorrichtungen zur Steuerung des Anstellwinkels für Schaufeln mit variabler Anstellung (VSV), einstellbaren Kompressor-Entlastungsventilen (VBV) und einer Pumpe eines Kreises zur Treibstoffversorgung des Triebwerks (GP).

7. Gasturbinen-Flugzeugtriebwerk nach einem der Ansprüche 1 bis 6, bei dem elektrische Einrichtungen des Triebwerks elektronischen Erregungs-, Steuer- oder Regelkreisen zugeordnet sind und wenigstens ein Teil der elektronischen Kreise im Bereich der entsprechenden Einrichtungen lokal angeordnet ist und über den ersten oder den zweiten elektrischen Versorgungsbus versorgt wird.

8. Gasturbinen-Flugzeugtriebwerk nach Anspruch 7, **dadurch gekennzeichnet, dass** wenigstens ein Teil der elektronischen Kreise in die entsprechende Einrichtungen integriert ist.

9. Gasturbinen-Flugzeugtriebwerk nach einem der Ansprüche 1 bis 8, bei dem Systeme zur Spieleinstellung an der Spitze von Turbinenschaufeln (LPTACC, HPTACC) elektrische Heizvorrichtungen umfassen, die direkt über den dritten Wechselspannungsbus (22) versorgt werden.

## Claims

1. A gas turbine airplane engine (20) comprising an electrical generator (21) driven by the gas turbine airplane engine for supplying electrical energy to an electricity distribution network of the airplane (10) and an electricity power supply circuit for airplane engine equipment, the electricity power supply circuit comprising a first bus (24) for distributing a DC voltage (24DC) or an AC voltage (24AC) to first electrical equipment of the engine and a second bus (30) for distributing a DC voltage (30DC) at higher voltage to other electrical equipment of the engine, the electricity power supply circuit for airplane engine equipment being **characterized in that** it further comprises a third AC bus (22) connected on the one hand to the first (24) and second (30) buses via at least one voltage converter or transformer and on the other hand to a power supply line (12) delivering an AC voltage and intended to be connected to the electricity distribution network of the airplane.

2. A gas turbine airplane engine according to claim 1, in which an additional electrical generator (21) driven by the gas turbine airplane engine supplies additional electrical energy to the electricity distribution network of the airplane so as to have a redundancy of the electrical power supply sources.

3. A gas turbine airplane engine according to claim 1, in which the third AC bus is connected to an electrical generator (34) dedicated to the engine (20) and driven thereby.

4. A gas turbine airplane engine according to any one of claims 1 to 3, in which the first electrical equipment of the engine are equipment that require electrical power of less than 100 W.

5. A gas turbine airplane engine according to any one of claims 1 to 4, in which the first electrical equipment of the engine comprise at least one equipment selected from: an electronic regulator module for the engine (1/2 ECU), a valve for controlling the overall flow rate of fuel delivered to the engine (FFCV) and an over-speed valve (OSV), a system for managing the health and the usage of members of the engine (HUMS), compressor transient bleed valves (TBV), valves for controlling the flow rate of fuel delivered to combustion chamber injectors of the engine (TAPS), valves for controlling air flow rate to adjust clearance at the tips of turbine blades(LPTACC, HPTACC), and a device for igniting combustion (IGNITION).

6. A gas turbine airplane engine according to any one of claims 1 to 5, in which the other electrical equipment of the engine comprise at least one equipment selected from: devices for controlling the pitch angle of variable pitch vanes (VSV), adjustable bleed valves for a compressor (VBV), and a pump of a circuit for supplying fuel to the engine (GP).

7. A gas turbine airplane engine according to any one of claims 1 to 6, in which the electrical equipment of the engine are associated with electronic circuits for excitation, control, or servo-control, and at least some of said electronic circuits are implanted locally with the corresponding equipment and are powered by the first or the second power supply bus.

8. A gas turbine airplane engine according to claim 7, **characterized in that** at least some of said electronic circuits are integrated in the corresponding equipment.

9. A gas turbine airplane engine according to any one of claims 1 to 8, in which systems for adjusting clearance at the tips of turbine blades (LPTACC, HPTACC) comprise electrical heater devices powered directly from the third AC bus (22).
